# EUROPÄISCHE PATENTSCHRIFT

(11) **EP 1 576 356 B1**
(45) Veröffentlichungstag und Bekanntmachung des Hinweises auf die Patenterteilung: **28.10.2009**
(21) Anmeldenummer: 03775037.9
(22) Anmeldetag: 11.12.2003
(51) Int. Cl.: G01N 21/55

(54) **Vorrichtung und Verfahren ZUR ERZEUGUNG ELEKTROMAGNETISCHER FELDVERTEILUNGEN**
APPARATUS AND METHOD FOR GENERATING ELECTROMAGNETIC FIELD DISTRIBUTIONS
APPAREIL ET PROCEDE POUR CREER DES REPARTITIONS DE CHAMPS ELECTROMAGNETIQUES

(30) Priorität: 19.12.2002 US 434987 P
(43) Veröffentlichungstag der Anmeldung: 21.09.2005
(73) Patentinhaber: Oerlikon Trading AG, Trübbach, 9477 Trübbach (CH)
(72) Erfinder: THOME-FÖRSTER, Heidi, CH-9478 Azmoos (CH); HEINE-KEMPKENS, Claus, CH-7304 Maienfeld (CH)
(86) Internationale Anmeldenummer: PCT/CH2003/000811
(87) Internationale Veröffentlichungsnummer: WO 2004/057315

(56) Entgegenhaltungen:
- WO-A-01/79821
- WO-A-98/08219
- US-A- 5 210 404
- US-A- 5 907 436
- US-A1- 2002 021 445
- US-B1- 6 483 959

## Beschreibung

Die vorliegende Erfindung bezieht sich auf eine Vorrichtung und ein Verfahren zur Erzeugung elektromagnetischer Felder in für zu belichtende Substanzen zugänglichen Bereichen. Insbesondere bezieht sich die Erfindung auf optische Sensoren zur Messung biologischer oder chemischer Substanzen.

Elektromagnetische Felder werden in einer Vielzahl von Anwendungen zur Detektion kleiner Konzentrationen von Substanzen in einer meist flüssigen Probe eingesetzt. Unter den optischen Sensoren, die auf Detektion von an der Oberfläche des Sensors angelagerten Substanzen beruhen werden grundsätzlich zwei Klassen unterschieden: Solche die mit markierten Substanzen arbeiten (Label-Methoden) und solche die ohne die Markierung auskommen (Label-freie Methoden).

Unter die Label-Methoden läßt sich ein Verfahren einordnen bei dem die zu detektierende Substanzen mit einem fluoreszierenden Farbstoff markiert werden. Handelsüblich Fluoreszenzfarbstoffe sind Beispiesweise CY5 für eine Anregungswellenlänge von 532nm und CY3 für eine Anregungswellenlänge von um die 635nm.

Diese Markierung kann selektiv sein, in der Regel betrifft sie aber auch andere, in einer zu messenden Probe vorhandenen Substanzen. Ist die Markierung nicht selektiv, so kann Selektion dann zum Beispiel dadurch erreicht werden, dass die Oberfläche des Sensors derart präpariert wird, dass ausschließlich die zu messende markierte-Substanz selektiv an diese Oberfläche gebunden wird. Wird nach vollzogener Bindung die Oberfläche gespült, so erhält man über die Stärke des resultierenden Fluoreszenzsignals eine quantitative Aussage über die Konzentration der zu messenden Substanz in der Messprobe. Eine quantitative Aussage läßt sich auch ohne Spülung machen wenn man erreicht, dass ein die Fluoreszenz anregendes elektromagnetisches Feld sich an der Oberfläche an die die zu detektierenden Substanzen gebunden werden, konzentriert und im wesentlichen auf diese beschränkt bleibt.

Solange nicht sämtliche an der Oberfläche gebundenen markierten Substanzen fluoreszieren gilt allgemein: je höher die sich an der Oberfläche aufbauende elektromagnetische Feldstärke relativ zur eingestrahlten Lichtintensität ist, umso besser kann das Signal zu Rausch Verhältnis (S/N-ratio) der Messung werden. Dies wirkt sich direkt auf die Messempfindlichkeit des Sensors aus. Bei solchen Sensoren wird daher versucht ein möglichst starkes elektromagnetisches Feld im Bereich der Oberfläche im Vergleich zum Messvolumen zu realisieren.

Neben diesen beschriebenen Label-Methoden, d.h. auf Marker basierenden Messmethoden, sind aber auch Label-freie Methoden üblich. Hierbei hat die zu messende Substanz zum Beispiel durch eine Brechungsindex-Änderung die sie bei Anlagerung an die Oberfläche des Sensors hervorruft, direkten Einfluss auf die Feldverteilung im Sensor. Dieser Einfluss wirkt sich auf optische Messgrößen wie zum Beispiel Beugungseffizienzen oder gegebenenfalls die geführten Wellen in einem Wellenleiter aus und ruft messbare Änderungen hervor. Auch hierbei ist wichtig, dass zumindest Teile der der Messsubstanz zugänglichen Bereiche elektromagnetischer Felder aufweisen, das sie beeinflussen können.

Eine Möglichkeit, eine derartige, der Messsubstanz zugängliche, Feldverteilung aufzubauen, ist die Ausnutzung von quergedämpften elektromagnetischen Wellen. Im einfachsten Fall arbeitet man mit einmaliger totaler interner Reflexion (TIR). Dabei wird die Oberfläche des Sensors vom Substrat her kommend unter einem Winkel, der grösser als der kritische Winkel der Totalreflexion ist, mit Anregungslicht beaufschlagt. An der Oberfläche entsteht dadurch ein quergedämpftes Feld, das exponentiell abfallend in das zu messende Medium vom Substrat weg hineinragt. In der Fachliteratur bezeichnet man solche Felder auch als evaneszente Felder da hier kein Licht in das zu messende Medium propagiert sondern lediglich in dieses "hineinragt", d.h. das Feld ist auf die unmittelbare Umgebung der entsprechenden Grenzfläche beschränkt.

Die sogenannte Eindringtiefe, d.h. der Abstand von der Grenzfläche bei dem die Feldstärke auf l/e, (wobei e die Eulersche Zahl ist) abgefallen ist, ist dabei unter anderem abhängig vom tatsächlichen Einfallswinkel und wird typischerweise in Einheiten der Vakuum-Wellenlänge des anregenden Lichtes gemessen und ist in derselben Größenordnung.
Ein Beispiel für die Ausnutzung von evanescenten Welle bei Sensoren ist in WO98/08219 von John Guerra gegeben. Dabei wird ein sogenanntes phasengesteuertes evanescentes Feld ausgenutzt, wobei die Ebenen konstanter Phase im Wesentlichen senkrecht zur Objektoberfläche liegen. Das Feld wird mittel TIR erzeugt und ist nicht überhöht.

Eine Möglichkeit ein solches evaneszentes Feld gegenüber der einfachen Totalreflexion zu überhöhen liegt darin, das Anregungslicht mehrmals an der Grenzfläche reflektieren zu lassen. Wird zum Beispiel eine optische Schicht mit im Vergleich zum Substrat hohem Brechungsindex und bestimmter Dicke auf das Substrat aufgebracht, so kann unter Umständen an beiden Grenzflächen der Schicht Totalreflexion stattfinden und das Licht propagiert geführt in der Schicht in einer sogenannten Wellenleitermode. Bei richtig gewählter Wellenleiterkonfiguration hat dies ein überhöhtes evaneszentes Feld an der Oberfläche des Wellenleiters zur Folge. Eine solche Konfiguration ist beispielsweise in US 6483959 von Singh et al offenbart und erläutert. Einen Schritt weiter wird in der US5210404 von Rosemary Cush et al. gegangen. Hier wird, um die Sensitivität des Sensors zu erhöhen, ein Bragg-Gitter unterhalb der Wellenleiterschicht eingeführt. Dieses Bragg-Gitter führt zu erhöhter Dispersion und damit zu einer grösseren Messgenauigkeit

Bei den Wellenleitern ist es wesentlich, dass die wellenleitende Schicht, d.h. die Schicht in der die Lichtwelle geführt wird, einen Brechungsindex besitzt, der höher ist als die Brechungsindizes des Substrates und des an die wellenleitende Schicht angrenzenden Mediums. Ist dies nicht der Fall, so kommt es nicht zur mehrfachen Totalreflexion und damit nicht zur Wellenleitung (siehe zum Beispiel WO 86/071149). Bei gegebenem Substrat ist daher die Auswahl der Materialien für die wellenleitende Schicht auf hochbrechende Materialien beschränkt.

Eine weitere Schwierigkeit ergibt sich aus der Tatsache, dass die Modenpropagation und damit die Feldstärke des zur Anregung zur Verfügung stehenden Feldes sehr empfindlich von der Wellenleiterkonfiguration und von eventuell vorhandenen Störstellen abhängt. Kleinste Verunreinigungen führen zu Streulicht und zu einer Abschwächung der Intensität des geführten Lichtes. Dies ist ein Effekt, der integral über die Distanz, den das geführte Licht im Wellenleiter propagiert, zum tragen kommt und damit selbst bei kleinen Verunreinigungen und/oder Defekten das Messergebnis verfälschen kann.

Eine weitere Schwierigkeit ist die Einkopplung des Lichtes in den Wellenleiter, die unter anderem mittels Stirnseiten-Beaufschlagung, Prismen-Kopplung oder Koppelgitter erreicht werden kann. In allen oben genannten Fällen ist es schwierig eine konstante Koppeleffizienz zu realisieren, die aber vorzugsweise für eine quantitative Aussage erzielt werden sollte.

Hinzu kommt, dass die Dichte der unterschiedlichen Messbereiche aufgrund der Ausdehnung des Wellenleiters begrenzt ist.

Eine weitere Möglichkeit zu einem überhöhten evaneszenten Feld zu kommen ist die Anregung sogenannter Oberflächenplasmonen. Diese in metallischen Schichten realisierten Anregungszustände propagieren in der Schichtebene bis sie beispielsweise durch Absorption im Metall oder durch Streuung zerfallen. Auch hier ist die Kontrolle der in dem Fall durch die Oberflächenplasmonen realisierte evaneszente Feldstärke eine große Schwierigkeit. Außerdem ist auch hier die Dichte der Messbereiche begrenzt, da Oberflächenplasmonen in der Regel endliche Strecken propagieren bevor sie zerfallen. Hinzu kommt, dass Metalle in vielen Fällen Stabilitätsprobleme aufweisen und insbesondere altern, was zu unzuverlässigen Messungen führen kann.

In neueren Ansätzen wird der wohlbekannte Effekt des resonanten Gitters mit anomalen Transmissionseinbrüchen ausgenutzt, wie zum Beispiel in WO2001/002839 von Novartis beschrieben (im folgenden Novartis-Anmeldung genannt). Analog zum Wellenleiter wird dabei auf das Substrat eine Schicht aufgebracht, deren Brechungsindex höher ist als der Brechungsindex des Substrates. Andernfalls tritt der resonante Effekt nicht auf. Außerdem wird der Messfeld-Bereich der Oberfläche durch periodische Gräben definiert.

Die Dimensionierung der Strukturen und Schichten wird so gewählt, dass bei Beaufschlagung mit kohärentem Licht unter bestimmtem Winkel ein Resonanzeffekt auftritt, bei dem die Transmission anomal reduziert ist und dabei das gewünschte evaneszente Feld aufgebaut wird. Dies ist mit dem Vorteil verbunden, dass Licht nicht in einer Wellenleitermode über eine lange Strecke propagieren muss und die Vorrichtung daher wesentlich unempfindlicher gegenüber Störstellen und Streuzentren ist. Hinzu kommt, dass im Vergleich zur Einkopplung in einen Wellenleiter das System kleiner gewählt und somit die Anzahl der Messbereiche stark erhöht werden kann, da das Licht im wesentlichen nicht lateral propagiert. Dieser Vorteil der potentiell erhöhten Messbereichsdichte wurde vor allem in W02000/75644 von Zeptosens (im folgenden Zeptosens-Anmeldung genannt) betont. Auch in der Zeptosens-Anmeldung werden kontinuierliche Modulationen im Messbereich realisiert, wobei allerdings noch von einem optischen Schichtwellenleiter ausgegangen wird.

Sowohl der Wellenleiter-Ansatz zur Realisierung einer hohen Feldstärke im Bereich der Oberfläche als auch der Ansatz über das resonante Gitter mit anomaler Transmission sind mit dem Nachteil behaftet, dass die an der Oberfläche realisierte Feldstärke lediglich ein Bruchteil der in der hochbrechenden Schicht und unter Umständen wellenleitenden Schicht realisierten Feldstärke darstellt. Zugänglich in diesen Systemen sind lediglich die quergedämpften evaneszenten Ausläufer des Feldes.

Des weiteren ist von Nachteil, dass in diesen Fällen eine hochbrechende Schicht als Abschluss gegenüber dem umgebenden Medium verwendet werden muss. Die Biochemie, aufgebaut auf SiO2-Oberflächen ist am weitesten entwickelt. Bei der Verwendung von Glassubstraten muss daher auf andere Materialien übergegangen werden, um.die im Vergleich zum Substrat hochbrechende Schicht zu realisieren. Beispielsweise wird hierzu TiO₂ oder Ta₂O₅ eingesetzt. Dies sind jedoch im Vergleich zu SiO₂ Materialien, die in Verbindung mit der Biochemie weniger etabliert sind. Es gibt die Möglichkeit auf die hochbrechende Schicht eine dünne SiO₂-Schicht aufzubringen. Diese muß dann allerdings sehr dünn gewählt werden, da der Abfall des evaneszenten Feldes auch in dieser Schicht exponentiell verläuft.

Es ist Aufgabe der vorliegenden Erfindung die obenstehenden Nachteile zu überwinden. Insbesondere ist es die Aufgabe der vorliegenden Erfindung eine Vorrichtung anzugeben, mittels der eine überhöhte Feldstärke erzielt werden kann, wobei die der Messsubstanz zugängliche maximale Feldstärke nicht nur die evaneszenten Komponenten der sich in der Vorrichtung aufbauenden Feldstärken umfassen soll. Ein weiterer Aspekt der vorliegenden Erfindung ist die Realisierung der hohen, nicht ausschließlich evaneszenten Feldstärken in an der Oberfläche liegenden Schichten deren Brechungsindex nicht oder nur unwesentlich höher (<1%) ist als der Brechungsindex des Substrates. Es ist auch Aufgabe der vorliegenden Erfindung ein Verfahren anzugeben gemäß dem eine solche Feldstärke erzielt werden kann.

Die Aufgabe wird erfindungsgemäß gelöst mittels einer Plattform zur Erzeugung einer elektromagnetischen Feldverteilung nach Anspruch 1.
Eine solche Plattform umfasst
- ein Substrat
- eine am Substrat vorgesehenen strukturierten Schicht, wobei die Schichtdicke der strukturierten Schicht durch die maximale Strukturtiefe bestimmt ist,
- Kopplungsmittel zur Kopplung von beaufschlagter elektromagnetischer Strahlung in die strukturierte Schicht zum Aufbau einer elektromagnetischen Feldverteilung innerhalb der strukturierten Schicht **dadurch gekennzeichnet, dass** zwischen Substrat (13) und strukturierter Schicht (19) ein Vielschichtsystem vorgesehen ist, dergestallt, dass das Vielschichtsystem (17) zumindest teilweise unterbindet, dass elektromagnetische Felder, die in der strukturierten Schicht (19) aufgebaut werden an solche, von null verschiedenen, höheren Beugungsordnungen der Felder koppeln, die in das Substrat (13) propa-gieren wobei die strukturierte Schicht, die Kupplungsmittel und das Vielschichtsystem aufeinander so abgestimmt sind, dass bei geeigneter Beaufschlagung der Plattform mit elektromagnetischer Strahlung die sich aufbauende elektromagnetische Feldstärke im Bereich der strukturierten Schicht maximal ist.

Eine Ausführungsform der Plattform ist ferner **dadurch gekennzeichnet, dass** der Brechungsindex oder gegebenenfalls der effektive Brechungsindex der strukturierten Schicht weniger als 1% höher, vorzugsweise jedoch kleiner ist als der Brechungsindex des Substrates ist.

Eine weitere Ausführungsform der Plattform ist ferner dadurch gekennzeichnet, dass die Struktur der strukturierten Schicht im Wesentlichen periodisch angeordnete Einformungen umfasst, die Bestandteil der Kopplungsmittel sind.

Eine weitere Ausführungsform der Plattform ist weiterhin **dadurch gekennzeichnet, dass** das Vielschichtsystem metallische Schichten, vorzugsweise aus Al, Ag, Au, deren Kombination oder anderen geeignete Materialien umfasst.

Eine weitere Ausführungsform der Plattform ist **dadurch gekennzeichnet, dass** das Schichtsystem dielektrische Schichten und vorzugsweise keine metallischen Schichten umfasst, wobei das Schichtsystem vorzugsweise in Wechselschichtbauweise aufgebaut ist, bei dem hoch und niederbrechende Schichten alternierend angeordnet sind.

Weitere Ausführungsformen der Plattform sind **dadurch gekennzeichnet, dass** die Art der Strukturierung, die Kopplungsmittel, und die Anzahl sowie das Material und die Dickenverteilung der Schichten des Vielschichtsystems so gewählt sind, dass die sich bei geeigneter Beaufschlagung der Plattform mit elektromagnetischer Strahlung aufbauende Feldstärkeverteilung in den schichtmaterialfreien Bereichen der strukturierten Schicht zumindest ein Maximum aufweist.

Mit einer erfindungsgemäßen Plattform kann eine Feldverteilungsplattform erzeugt werden, die zusätzlich eine Quelle für die Erzeugung elektromagnetische Strahlung und ein elektromagnetisches Feld umfasst, dessen Feldstärke im Bereich der strukturierten Schicht maximal ist.

In einer besonderen Ausführungsform der genannten Feldverteilungsplattform weist die elektromagnetischen Feldverteilung in den schicht-materialfreien Bereichen der strukturierten Schicht zumindest ein Maximum auf.

Die vorhergenannten Plattformen und Feldverteilungsplattformen können Bestandteil eines Sensors zur Messung spezifischer Substanzen in eine biologischen und/oder chemischen und/oder biochemischen Probe sein.

Die Aufgabe, ein Verfahren anzugeben gemäß dem eine überhöhte nicht ausschliesslich evaneszente Feldverteilung erzeugt werden kann wird mit folgenden Schritten gelöst:
- Auswahl eines Substrates
- Auswahl des Materials und der Struktur einer strukturierte Schicht
- Auswahl der Materialien für ein Vielschichtsystem
- Festlegung der Parameter der zur Beaufschlagung verwendeten elektromagnetischen Strahlung
- Simulation und Optimierung der elektomagnetischen Feldverteilung innerhalb einer das Substrat, das Vielschichtsystem und die strukturierte Schicht umfassenden Plattform bei Beaufschlagung mit elektromagnetischer Strahlung gemäß den festgelegten Parametern, wobei das Vielschichtsystem zwischen Substrat und strukturierter Schicht vorgesehen ist und es zumindest teilweise'unterbinden soll, dass elektromagnetische Felder, die in der strukturierten Schicht (19) aufgebauten werden, an solche, von null verschiedenen, höheren Beugungsordnungen der Felder koppeln, die in das Substrat (13) propagieren Optimierungsziel eine Feldverteilung, die maximal innerhalb der strukturierten Schicht ist;
- Aufbau der Plattform zumindest angenähert gemäß dem Resultat der Optimierung.
- Beaufschlagung der Plattform mit elektromagnetischer Strahlung gemäß den festgelegten Parametern.

In einer weiteren Ausführungsform des Verfahrens wird als Optimierungsziel eine elektromagnetische Feldverteilung angestrebt, die in den schichtmaterialfreien Bereichen der strukturierten Schicht zumindest ein Maximum aufweist.

Erfindungsgemäß wird die Aufgabe also durch geschickte Kombination der Eigenschaften von dielektrischen Vielschichtsystemen und von optischen Gittern gelöst. Hierbei wird sowohl das Prinzip der Wellenleitung in hochbrechenden Schichten als auch das Prinzip der anomalen Reduktion der Transmission von resonanten Gittern aufgegeben. Demgegenüber wird auf dem Substrat ein dielektrisches Wechselschichtsystem angeordnet, auf dem ein Beugungsgitter vorgesehen ist.

Solche Strukturaufbauten sind aus der Literatur in Anwendungen bekannt, in denen beispielsweise Effizienz der Beugungsordnungen auf bestimmte Werte eingestellt werden soll. Zum Beispiel wird von Perry et al. in US 5'907'436 (im folgenden Perry '436) eine solche Struktur beschrieben, deren Konfiguration so gewählt ist, dass der Anteil des einfallenden Lichtes, der Reflexion und Transmission der nullten und der höheren Beugungsordnungen durch die Anzahl der Schichten, Dicke mindestens einer Schicht und Tiefe und Form der Gitterstrukturen vorbestimmt ist.

Gemäß der vorliegenden Erfindung wird ein solches System nur oder zusätzlich dahingehend zu optimiert, dass im Bereich der Oberflächenstrukturen und insbesondere im Bereich der Gittergräben das optimierte System eine hohe oder gar die höchste Feldstärke besitzt. Durch eine solche Vorgehensweise gelangt man zu Systemen, in denen sich bei Beaufschlagung mit der für die Optimierung angesetzten elektromagnetischen Strahlung eine Feldverteilung aufbaut, die Maxima in den für die Messung zugänglichen Gittergräben aufweist.

Zur Optimierung eignen sich sowohl lokale Optimierungsmethoden als auch globale Methoden, die beide dem Fachmann auf dem Gebiet der optischen Beschichtungen z.B. für die Optimierung von optischen Wechselschichtsystemen hinreichend bekannt sind. Die Anwendung solcher Optimierungsmethoden im Zusammenhang mit dem vorliegenden Optimierungsziel ist dagegen neu und erfinderisch. Allerdings weiß der Fachmann, wie vorzugehen ist, sobald ihm der neue Aspekt offenbart wurde, dass er auf die elektromagnetische Feldstärke in gewissen Bereichen der Struktur optimieren soll und diesbezüglich die Systemparameter als Optimierungsparameter, insbesondere die Schichtdicken und die Gittertiefe ansetzen soll. Damit ist die Lehre zum technischen Handeln vollständig offenbart.

Soll, zum besseren Verständnis, dennoch ein anschauliches Bild als Erläuterung gegeben werden, so kann das Vielschichtsystem als Mittel zu Entkopplung der strukturierten Schicht vom Substrat bezüglich höherer Beugungsordnungen angesehen werden. Ein- und Auskopplung elektromagnetische Strahlung in die oder aus der strukturierte Schicht ist dann im wesentlichen auf die nullten Beugungsordnungen in Transmission oder Reflexion beschränkt. Dies kann zum Aufbau hoher elektromagnetischer Felder innerhalb der strukturierten Schicht führen, insbesondere auch dann, wenn es sich um Beugungsstrukturen mit schwacher Beugungseffizienz handelt.

Da solche anschaulichen Erläuterungen, insbesondere in einem Fall wie dem vorliegenden Fall, die Physik nur eingeschränkt korrekt wiedergeben können wird nochmals betont, dass der im Umgang mit optischen Vielschichtsystemen und Beugungsgitter sowie deren Optimierung geschulte Fachmann seine Optimierungsstrategie auf die Optimierung elektromagnetischer Feldverteilungen erweitern muss, um zu einem erfindungsgemäßen System gemäß der hier skizzierten Lösung der hier behandelten technischen Aufgabe zu gelangen.

Eine solche Feldverteilung läßt sich insbesondere mit einem System erreichen, dessen homogene Schicht, auf der das Gitter angeordnet ist, und/oder dessen Gitterstruktur aus einem niederbrechenden Material und insbesondere aus einem Material bestehen kann, dessen Brechungsindex kleiner oder gleich dem Brechungsindex des Substrates ist. Damit ist auch klar, dass der vorliegende Effekt weder auf dem Effekt der mit hohem Brechungsindex verknüpften Wellenleitung und den damit verbundenen elektromagnetischen Feldern beruht, noch auf dem Effekt der mit hohem Brechungsindex verknüpften resonanten Gitter in Verbindung mit Reflexions- und/oder Transmissionsanomalien zurückgeführt werden kann. Im Gegensatz dazu ist es durchaus möglich, erfindungsgemäße Systeme zu realisieren, die entgegen dem Stand der Technik die Reflexion im wesentlichen unterbinden, was für die Anwendung durchaus von Vorteil sein kann, wie weiter unten beschrieben.

Kurze Beschreibung der Figuren:
Figur 1 zeigt schematisch eine Struktur gemäß dem Stand der Technik gemäß der Novartis Anmeldung. Zusätzlich zeigt die Figur die in dieser Struktur sich aufbauende Feldverteilung bei Beaufschlagung mit Licht.
Figur 2 zeigt die mit der in Figur 1 verbundene Abhängigkeit der Reflexion und der Transmission als Funktion der Wellenlänge. Deutlich sichtbar ist die anomale Reduktion der Transmission auf kleiner 1%. -
Figur 3 zeigt schematisch eine Ausführungsform einer Struktur gemäß der vorliegenden Erfindung. Zusätzlich zeigt die Figur sich aufbauende Feldverteilung bei Beaufschlagung mit Licht.
Figur 4 zeigt die mit dem in Figur 3 dargestellten System verbundene Abhängigkeit der Reflexion und der Transmission als Funktion der Wellenlänge. Die Spektren weisen weder anomale Reflexion noch anomale Transmission auf.
Figur 5 zeigt schematisch eine weitere vorteilhafte Ausführungsform einer Struktur gemäß der vorliegenden Erfindung.
Figur 6 zeigt die mit dem in Figur 5 dargestellten System verbundene erbundene Abhängigkeit der Reflexion und der Transmission als Funktion der Wellenlänge. Deutlich zu sehen ist, dass hier die Reflexion auf unter 1% abfällt.
Figur 7 zeigt den zu Figur 6 analogen Graphen für den Bereich von 632.8nm bis 633.2nm. Hierbei wird deutlich, dass bei einer Wellenlänge von 632.95nm die Reflexion sogar ganz unterdrückt werden kann.
Figur 8 zeigt einen Messaufbau gemäß der vorliegenden Erfindung zur selektiven Detektion von Messsubstanzen.
Die Erfindung wird im folgenden detailliert mit Hilfe von Beispielen und anhand der Figuren beschrieben.

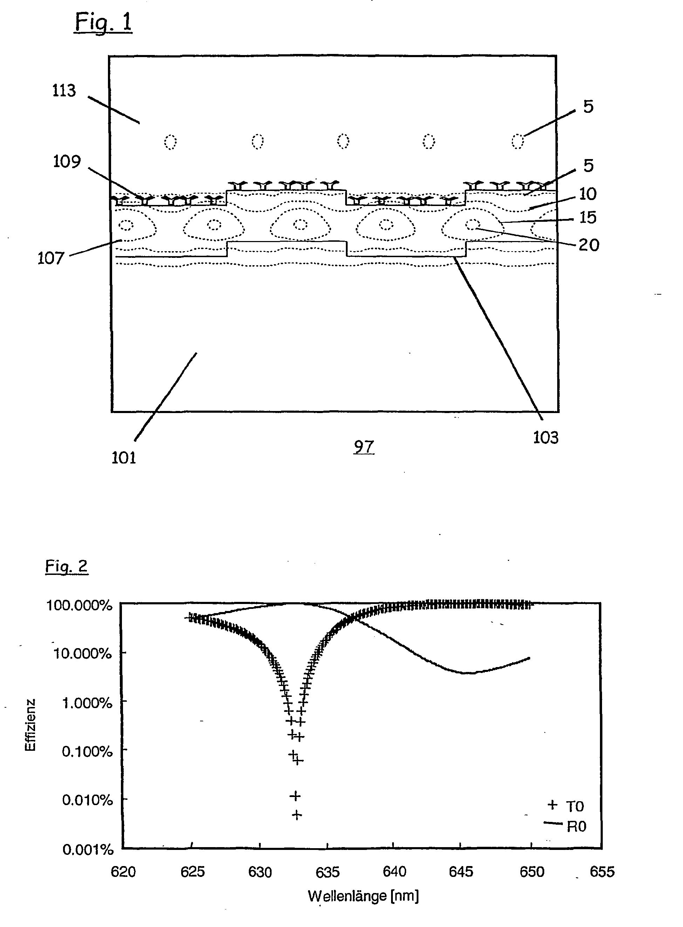

Um die Grundidee der vorliegenden Erfindung besser verständlich zu machen ist es hilfreich zunächst ein typisches Beispiel des Stand der Technik wie es in der Novartis-Anmeldung offenbart ist, genauer zu analysieren. Ein solches System 97 ist in Figur 1 schematisch dargestellt. Bei dem System handelt es sich um ein strukturiertes Substrat 101 mit einem Brechungsindex von n=1.52 in dem ein periodisches Gitter mit der Gitterperiode von 360nm und einer Gittertiefe von 38nm realisiert ist. Das strukturierte Substrat 101 ist mit einer dielektrischen Schicht mit Brechungsindex n=2.2 und einer Dicke von 130nm belegt. Damit ist der Brechungsindex der Schicht deutlich höher als der Brechungsindex des Substrates. Die Gitterstruktur des Substrats überträgt sich in diesem Fall an die Oberfläche, die den Abschluss zum umgebenden Medium, im folgenden Superstrat 113 genannt, bildet. Eingezeichnet sind auch biologische Bindungsmoleküle 109 wie sie zum Beispiel bei einer Antikörper-Antigen Reaktion Anwendung finden.

Das System wird im Beispiel mit Licht der Wellenlänge 633nm unter einem Einfallswinkel von ϑ₁=2.9° mit TE-Polarisation beaufschlagt. Dieser Winkel entspricht dem Resonanzwinkel des Systems bei dem die Transmission anormal reduziert ist. Die Beaufschlagung erfolgt von der Superstratseite aus. Der einfallende Lichtstrahl spannt zusammen mit der Flächennormalen auf die hochbrechende Schicht die Einfallsebene auf. Die Beaufschlagung erfolgt derart, dass die Gitterstege diese Einfallsebene senkrecht durchstoßen, das heißt im hier betrachteten Beispiel handelt es sich um nicht konische Beaufschlagung. Die TE-Polarisation ist **dadurch gekennzeichnet, dass** dabei der elektrische Feldvektor in der Ebene senkrecht zur Einfallsebene schwingt.

In der Figur 1 sind zusätzlich gestrichelte Linien eingezeichnet die Linien gleichen Amplitudenquadrats der Feldverteilung darstellen. Die entsprechenden Bezugszeichen 5, 10, 15, und 20 geben die entsprechenden Werte des Amplitudenquadrats an. Sämtliche Angaben die sich in dieser Schrift auf Werte der Amplitudenquadrate beziehen sind Angaben relativ zu dem Amplitudenquadrat einer ebenen Welle. Mit anderen Worten hat das Licht, mit dem beaufschlagt wird ein Amplitudenquadrat von 1. Bezugszeichen sind nur für eines der Maxima eingezeichnet. Es fällt auf, dass die Maxima des Amplitudenquadrates völlig unzugänglich für die zu messenden Substanzen in der hochbrechenden Schicht eingebettet sind und die biologischen Koppelelemente lediglich die evaneszenten Ausläufer des Feldes zu spüren bekommen.

Betrachtet man hier die Beugungseffizienzen als Funktion der Wellenlänge, dargestellt in Figur 2, so ist klar, dass sämtliche beaufschlagte Energie in diesem Fall in den nullten Beugungsordnungen konzentriert ist. Dies ist Grundlage des im Stand der Technik verwendeten resonanten Effekts. Ausserdem ist bei der Wellenlänge von 633nm eine Reflexion von nahezu 100% erreicht, während die Transmission entsprechend auf nahezu 0% zurückgeht, d.h. der Effekt der anormalen Reduktion der Transmission ist bei 633nm erkennbar. In der Figur 2 ist zur Verdeutlichung des resonanten Effektes eine logarithmische Skala verwendet.

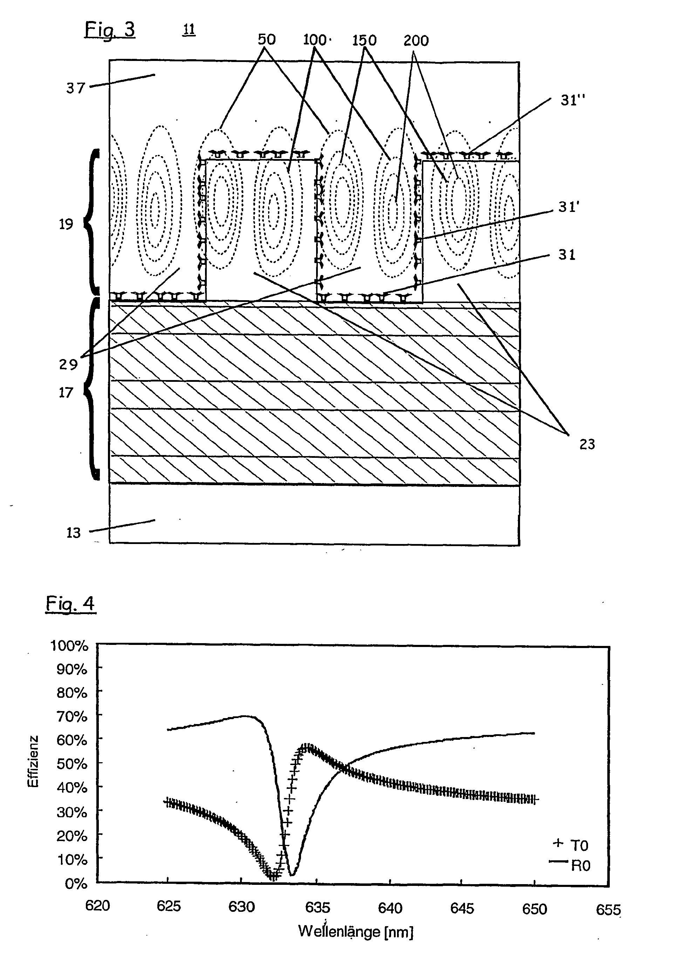

Im ersten Beispiel gemäß der vorliegenden Erfindung, schematisch in Figur 3 dargestellt, wird ein erfindungsgemäßes System 11 offenbart, welches auf einem Substrat 13 mit Brechungsindex von ca. n=1.52 realisiert ist. Dies würde standardmäßig dem Brechungsindex von z.B. BK7 oder ähnlichem Glas entsprechen. Auf dieses Substrat ist ein dielektrisches Schichtsystem 17 mit 6 Schichten aufgebracht. Die erste Schicht hat einen Brechungsindex von ca. n=2.35, der zum Beispiel mittels TiO₂ realisiert werden kann. Die zweite Schicht hat einen Brechungsindex von ca. n=1.48, der zum Beispiel durch SiO₂ realisiert werden kann. Das Schichtsystem endet mit einer obersten SiO₂-Schicht. Auf diese Schicht aufgebracht ist eine periodische Gitterstruktur. Die Gitterperiode liegt bei 550nm. das Material der Gitterstege hat einen Brechungsindex von ca. n=1.48, was durch Strukturierung einer SiO₂-Schicht realisierbar wäre. Die Gittergräben haben einen Brechungsindex von ca. n=1, d.h. Luft oder Vakuum oder ähnliches. Im Beispiel liegt ein Rechteckgitter mit einer Periode von 550nm vor, dessen Stege und Gräben dieselbe Ausdehnung haben, d.h. es liegt ein Füllfaktor von f=0.5 vor. Das Medium, das sich an das Gitter anschließt, im folgenden wiederum Superstrat 37 genannt, hat ebenfalls den Brechungsindex n=1, d.h. das Gitter bildet den Abschluss des Systems gegenüber dem umgebenden Medium. Die Gittergräben sind daher frei zugänglich für aufzubringende und sich anlagernde Messsubstanzen.

Das System wird im Beispiel mit Licht der Wellenlänge 633nm unter einem Einfallswinkel von ϑ=2° mit TE-Polarisation beaufschlagt. Die Beaufschlagung erfolgt von der Superstratseite aus. Der einfallende Lichtstrahl spannt zusammen mit der Flächennormalen auf die letzte Schicht die Einfallsebene auf. Die Beaufschlagung erfolgt derart, dass die Gitterstege diese Einfallsebene senkrecht durchstoßen, das heißt im hier betrachteten Beispiel handelt es sich um nicht konischen Einfall. Die TE-Polarisation ist **dadurch gekennzeichnet, dass** dabei der elektrische Feldvektor in der Ebene senkrecht zur Einfallsebene schwingt. Damit ist die Beaufschlagungsbedingung mit Licht bis auf den geänderten Einfallswinkel identisch zum erläuterten Beispiel des Stand der Technik.

Zur vollständigen Definition des Systems fehlen lediglich noch die Schichtdicken der einzelnen Schichten, sowie die Gittertiefe der Gitterstruktur. Diese wurden mit Hilfe von statistischer Optimierung aufgefunden. Hinsichtlich der Zielfunktion für die Optimierung gibt es unterschiedliche Möglichkeiten. Im Beispiel wurde als Ziel der Optimierung die maximale Feldstärke an einer Stelle im Bereich innerhalb der Gittergräben definiert. Zur Optimierung eignen sich sowohl lokale Optimierungsmethoden als auch globale Methoden, die beide dem Fachmann z.B. für die Optimierung von optischen Wechselschichtsystemen in der Dünnfilmtechnik hinreichend bekannt sind. Die Anwendung solcher Optimierungsmethoden im Zusammenhang mit der vorliegenden Anwendung ist dagegen neu und erfinderisch. Allerdings weiß der Fachmann, wie vorzugehen ist, sobald ihm der neue Aspekt offenbart wurde, dass er die Feldstärke optimieren soll und diesbezüglich die Systemparameter als Optimierungsparameter, insbesondere die Schichtdicken und die Gittertiefe ansetzen soll. Damit ist die Lehre zum technischen Handeln vollständig offenbart.

Die folgende Tabelle 1 zeigt das Resultat einer solchen Optimierung:

**Tabelle 1:**

| | Brechungsindex | Schichtdicke oder Gittertiefe [nm] | Beispiel |
|---|---|---|---|
| Superstrat | 1 | - | Luft |
| Gitter | 1,48 und 1 | 387 | SiO2 und Luft |
| Schicht 6 | 1.48 | 10.3 | SiO₂ |
| Schicht 5 | 2.35 | 74.6 | TiO₂ |
| Schicht 4 | 1.48 | 129.6 | SiO₂ |
| Schicht 3 | 2.35 | 76.3 | TiO₂ |
| Schicht 2 | 1.48 | 127.9 | SiO₂ |
| Schicht 1 | 2.35 | 75.7 | TiO₂ |
| Substrat | 1.52 | - | BK7 |

In der Figur 3 dargestellt ist schematisch das im Beispiel beschriebene System 11 gezeigt. Auf dem Substrat aufgebracht ist das Schichtsystem 17 bestehend aus 6 Schichten. Auf dieses Schichtsystem 17 ist eine Gitterstruktur 19 realisiert die sowohl Gitterstege 23 als auch Gittergräben 29 umfasst. Die Gitterperiode ist 550nm. In die Figur 3 eingezeichnet sind auch biologische Bindungsmoleküle 31,31',31'' auf der Oberfläche, wie sie zum Beispiel bei einer Antikörper-Antigen Reaktion Anwendung finden. Dabei gibt es gegebenenfalls solche Bindungsmoleküle 31, die am Grabenboden sitzen, gegebenenfalls solche Bindungsmoleküle 31', die an den Seitenwänden befestigt sind und gegebenenfalls solche Bindungsmoleküle 31'', die auf den Gitterstegen sitzen. Natürlich sind auch andere Gitterprofile, z.B. sinusförmige oder überhängende Profile möglich, wobei überall Koppelelemente fixiert werden können. In der Figur 3 sind zusätzlich gestrichelte Linien eingezeichnet die Linien gleichen Amplitudenquadrats der Feldverteilung darstellen. Die entsprechenden Bezugszeichen 50, 100, 150 und 200 geben die entsprechenden Werte des Amplitudenquadrats an. Bemerkenswert hierbei ist, dass in den Gräben 29 der Gitterstruktur ein maximales Amplitudenquadrat von mehr als 200 ereicht wird. Diese Maxima sind deutlich höher als beim Stand der Technik und im Unterschied zu diesem voll für die Messsubstanzen zugänglich.

Wie aus der Figur 3 ersichtlich, ist die ganze maximale Feldverteilung auf den Bereich des Gitters eingeschränkt. Dies ist im Vergleich zum Stand der Technik auch daher ein neues System, weil die das Gitter bildende Materialien jeweils einen Brechungsindex besitzen der nicht über dem Brechungsindex des Substrates liegt und sogar deutlich niedriger sein kann.

Der aus dem Stand der Technik bekannte Effekt der resonanten Gitter, der zu einer anormalen Reduktion der Transmission führt, geht, wie beschrieben, einher mit einer Reflexion von nahezu 100%. In Figur 4 dargestellt ist die Abhängigkeit der Beugungseffizienzen als Funktion der Wellenlänge des Lichtes im Fall des beschriebenen ersten Beispiels gemäß der vorliegenden Erfindung. Deutlich zu sehen ist, dass über den gesamten betrachteten Wellenlängenbereich die Reflexion nicht über 70% geht und die Transmission in der nullten Ordnung nicht unter 2% geht. Bei der im Beispiel betrachteten Wellenlänge von 633nm liegt eine Reflexion von 14% vor während die Transmission nullter Ordnung ca 25% beträgt.

In folgenden zweiten Beispiel wird sogar erreicht dass die Reflexion des Systems auf unter 10% sinkt. Wiederum umfaßt das System 211 ein Substrat 223, ein Schichtsystem 227, einen Gitterbereich 229 mit einer Periode von 550nm, biologische Koppelelemente 233,233',233'' und ein Superstrat 239. Die Art des beaufschlagten Lichtes entspricht der Art des ersten Beispiels. Es wurde bei der Optimierung als Ziel die Anforderung gestellt, die Reflexion entsprechend niedrig zu halten bei immer noch hoher Feldstärke in den Gittergräben. Das System wurde entsprechend dem im ersten Beispiel beschriebenen System angesetzt, wobei hier 16 Schichten für die Optimierung angesetzt wurden und anstatt TiO2-Schichten wurden Ta2O5-Schichten verwendet. Die Optimierung der Schichtdicken ergab das folgende System:

| | Brechungsindex | Schichtdicke oder Gittertiefe [nm] | Beispiel |
|---|---|---|---|
| Superstrat | 1 | - | Luft |
| Gitter | 1,48 und 1 | 300 | SiO2 und Luft |
| Schicht 16 | 1.48 | 68.3 | SiO₂ |
| Schicht 15 | 2.1 | 92.6 | Ta₂O₅ |
| Schicht 14 | 1.48 | 181.9 | SiO₂ |
| Schicht 13 | 2.1 | 93.3 | Ta₂O₅ |
| Schicht 12 | 1.48 | 204,9 | SiO₂ |
| Schicht 11 | 2.1 | 77,7 | Ta₂O₅ |
| Schicht 10 | 1.48 | 286,8 | SiO₂ |
| Schicht 9 | 2.1 | 73,7 | Ta₂O₅ |
| Schicht 8 | 1.48 | 126,1 | SiO₂ |
| Schicht 7 | 2.1 | 77,7 | Ta₂O₅ |
| Schicht 6 | 1.48 | 124,0 | SiO₂ |
| Schicht 5 | 2.1 | 76,7 | Ta₂O₅ |
| Schicht 4 | 1.48 | 292,7 | SiO₂ |
| Schicht 3 | 2.1 | 76,3 | Ta₂O₅ |
| Schicht 2 | 1.48 | 119,0 | SiO₂ |
| Schicht 1 | 2.1 | 79,6 | Ta₂O₅ |
| Substrat | 1.52 | - | BK7 |

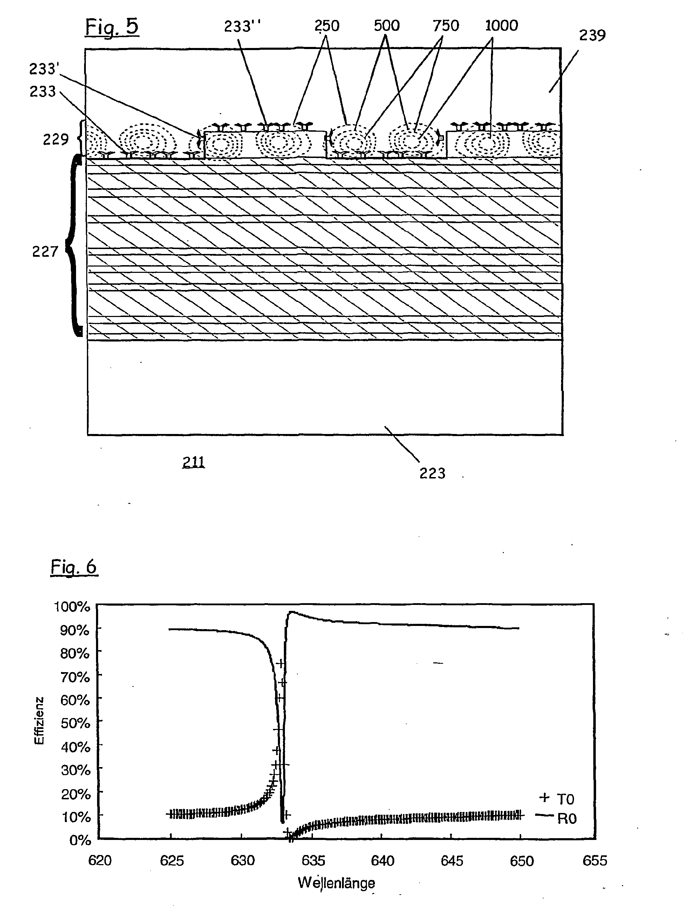

Die Figur 5 zeigt dieses System schematisch sowie die dazugehörende Feldverteilung in der Art dargestellt wie bereits bei den Figuren 1 und 3 geschehen. In dieser Figur 5 ist allerdings aus darstellerischen Gründen für die Ausdehnung in Richtung der Schichtebenen ein zweifach vergrößerter Maßstab im Vergleich zu der Ausdehnung in Richtung der Schichtdicken gewählt. In der Figur 5 sind zusätzlich gestrichelte Linien eingezeichnet, die Linien gleichen Amplitudenquadrats der Feldverteilung darstellen. Die entsprechenden Bezugszeichen 250, 500, 750, und 1000 geben die entsprechenden Werte des Amplitudenquadrats an.
Wie zu sehen ist eine hohe Feldstärke im Bereich der Gittergräben realisiert.

Die dazugehörende Figur 6 gibt die Reflexion und die Transmission als Funktion der Wellenlänge an. Deutlich wird, dass bei keiner Wellenlänge des betrachteten Bereichs die Reflexion an 100% herankommt. Sehr wahrscheinlich liegt hier ein resonanter Effekt vor, der jedoch offensichtlich von dem im Stand der Technik (Novartis-Anmeldung) beschriebenen unterschiedlich ist.

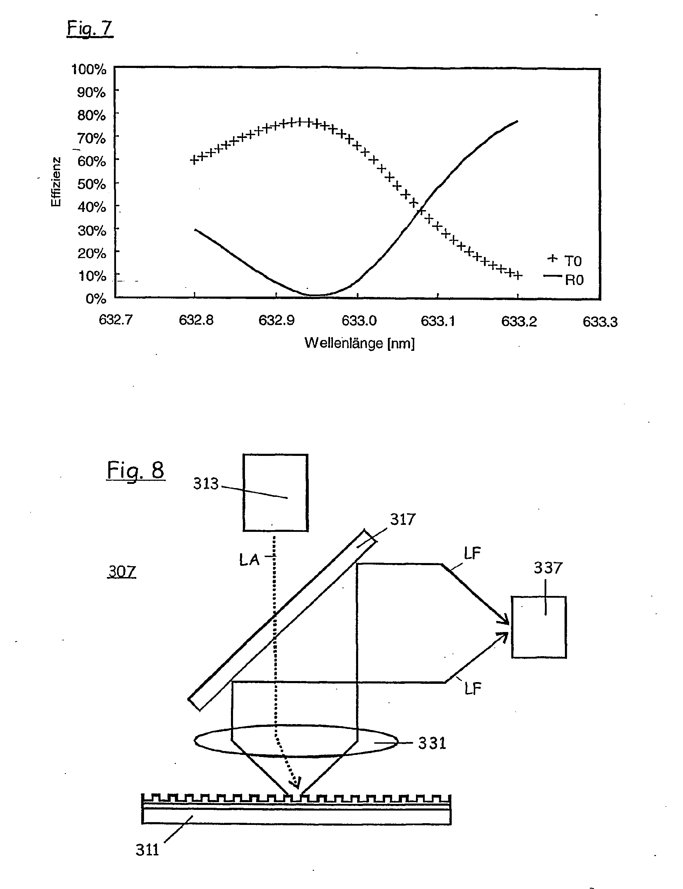

Die Figur 7 entspricht der Figur 6, wobei lediglich der Wellenlängenbereich von 632.8nm bis 633.2nm dargestellt ist. Dabei ist zu sehen, dass für eine Wellenlänge von 632.95nm die Reflexion sogar ganz unterdrückt werden kann. Bei Perry '436 war die Gitterperiode kein Optimierungsparameter, da es hierbei auch um Beugungseffizienzen und deren Propagationsrichtung auch höherer Beugungsordnungen ankommt. Die Richtungen werden durch die Gitterperiode bestimmt. Da diese bei der vorliegenden Erfindung zunächst eine untergeordnete Rolle spielen, ist die Gitterperiode ein freier Parameter, der entsprechend in die Optimierung eingehen kann. Aus dem Grund ist es möglich das Gitter, z.B. durch Skalierung so anzupassen, dass die minimale Reflexion bei der gewünschten Wellenlänge (im Beispiel bei 633nm) liegt. Dies ist insbesondere dann von Vorteil wenn darauf geachtet werden muss dass kein Anregungslicht durch Reflexion zum Detektor für Fluoreszenzlicht gelangt.

Figur 8 zeigt schematisch eine Möglichkeit wie ein der Erfindung entsprechender Messaufbau 307 gestaltet sein kann. Ausgemessen werden sollen die auf dem Messchip 311 gekoppelten fluoreszenzmarkierten spezifischen Substanzen. Der Messchip 311 wird mit im wesentlichen parallelem Anregungslicht LA unter einem genau definierten Winkel beaufschlagt. Dies kann zum Beispiel dadurch erreicht werden, dass ein gebündelter Lichtstrahl durch eine Linse 331 transmittiert. Im Beispiel kommt das Anregungslicht LA von einer Lichtquelle 313 und wird durch einen selektiven Spiegel 317 und durch die Linse 331 transmittiert und trifft auf die Oberfläche des Messchips 311. Hier baut sich im Gitterbereich ein starkes elektromagnetisches Feld auf, das die zu messende spezifische und an die Oberfläche gebundene Substanz zur Fluoreszenz anregt. Fluoreszenzlicht LF propagiert dann zur Linse 331. Da sich die Oberfläche in der Fokalebene der Linse 313 befindet, propagiert dieses Fluoreszenzlicht LF als im wesentlichen paralleles Lichtbündel zum selektiven Spiegel 317 der es zu einem Detektor 337 reflektiert, der die Intensität der Fluoreszenz misst.

Natürlich gibt es unterschiedliche Ausgestaltungsformen einer solchen Anordnung. Zum Beispiel kann man eine Lichtquelle verwenden, die die Linse 331 gleichzeitig mit unterschiedlichen diskreten oder kontinuierlichen Winkeln beaufschlagt und somit mehrere Punkte oder einen ganzen Bereich der Oberfläche des Messchips 311 beleuchtet. Wird dann anstatt des Detektors eine Detektorzeile oder Matrix verwendet (zum Beispiel ein CCD-Chip) so können gleichzeitig mehrere Bereiche des Messchips ausgewertet werden.

In der Regel werden die zu messenden Substanzen gelöst in einer flüssigen Probe auf das Substrat aufgebracht. Dabei ist es wichtig, dass eine geringe Ausdehnung der Tropfen auf der Oberfläche realisiert werden kann. Es hat sich gezeigt, dass insbesondere bei tiefen Gittergräben die Tropfen dazu tendieren auseinander zu laufen. Dies aufgrund der durch die Gräben auf die Tropfen wirkenden Kapillarkräfte. Im Extremfall fliesen die Tropfen sogar ineinander über. Um dem entgegen zu wirken können die Gräben durch Fliessbarrieren verstopft werden. Dies können beispielsweise zu den Gitterstäben quer stehende , durchgehende Wände sein. Solche Wände lassen sich durch dielektrisches Beschichten der Plattform durch eine Maske hindurch realisieren. Typische Größen für die Durchmesser einzelner Messfelder, im folgenden Spot-Durchmesser genannt, sind derzeit 80µm bis 200µm. Vorteilhafterweise ist der Abstand zweier Wände jedoch mindestens Faktor drei kleiner, vorzugsweise Faktor fünf bis zehn kleiner als der zu erreichende Spot-Durchmesser damit garantiert ist, dass tatsächlich nicht zwei Tropfen sich einen gleichen Zwischenwandbereich teilen müssen.

Bisher wurden lediglich die Methoden zur Messung von sich spezifisch bindenden Substanzen betrachtet, die auf der Basis von Fluoreszenzmarken arbeiten. Es ist jedoch klar, dass das erfindungsgemäße System auch direkte Messmethoden ermöglicht, d.h. Messmethoden die ohne spezifischen Marker auskommen. Eine ausführliche Beschreibung solcher Label-freien Methoden ist zum Beispiel in WO 86/07149 zu finden. Ziel einer solchen Messung kann zum Beispiel die Bestimmung der Brechwertänderung in einer im Beispiel flüssigen Messsubstanz sein. Diese Messsubstanz füllt die Gräben des Gitterbereichs. Ändert sich der Brechungsindex in der Messsubstanz, so ändert sich damit auch der Brechungsindex im Bereich der Gräben. Diese Änderung beeinflußt direkt die Konfiguration des Gitters und die sich darin aufbauende Feldstärkeverteilung. Diese Änderung kann mittels unterschiedlicher Methoden gemessen werden da dies direkt Einfluß auf die reflektierten und/oder transmittierten Beugungsordnungen (nullte und auch höhere Ordnungen) hat. Natürlich kommen hier auch spektrale und/oder winkelabhängige Messungen, d.h. Messung einer oder mehrerer Beugungsordnungen als Funktion der Wellenlänge in Frage.

Label-freie, selektive Messung wird zum Beispiel durch spezifische Chemisorption oder Physisorption, Adsorption, Desorption und/oder chemische Bindung (im folgenden unter Substanzeinwirkung zusammengefasst) von zu messenden Substanzen an der Oberfläche möglich. Dies führt zu einer messbaren Veränderung der Konfiguration des die Feldverteilung mitbestimmenden Gesamtlayouts des Messchips und insbesondere die des Gitterbereichs. Beispielsweise kann sich durch eine solche Substanzeinwirkung der Füllfaktor des Gitterbereichs ändern, der aber entscheidend die Beugungseffizienzen mitbeeinflusst. Es ist klar, dass Selektivität einer solchen Substanzeinwirkung auch mittels einer Zusatzschicht erzielt werden kann, die aufgrund des sogenannten Schlüssel-Schloss-Prinzips die zu messenden Substanzen spezifisch an sich bindet. Zum Beispiel könnten zu Messbeginn lediglich Antikörper an der Gitteroberfläche, insbesondere den Gittergräben folgend, gebunden sein. Während der Messung binden sich die entsprechenden Antigene und ändern dadurch die Gitterkonfiguration.

Besonders interessant ist die Möglichkeit, auf die erfindungsgemäßen Systeme einen Filter direkt zu integrieren. Es ist nämlich möglich, die Gitterstrukturen so zu beschichten, dass die Gittergräben nicht oder nur wenig gefüllt werden, während sich Schichtmaterial im wesentlichen auf den Gitterstegen ablagert. Dies kann beispielsweise durch Beschichten mittels Sputtertechniken erzielt werden. Bei diesem Beschichtungsprozess verjüngt sich mit zunehmender Beschichtungsdicke der Gittergraben. Es entsteht daher ein sich zur Oberfläche hin verjüngender Kanal, d.h. mittels Beschichtung kann jede gewünschte Öffnungsbreite, die kleiner oder gleich der ursprünglichen Grabenbreite ist, eingestellt werden. Partikel, die sich in der Messsubstanz befinden und einen größeren Durchmesser als die Kanalbreite haben, werden nicht in die Grabenregion diffundieren können. Damit liegt die Möglichkeit einer integrierten mechanischen Filterung vor. Es besteht die Möglichkeit den sich verjüngenden Kanal aus einem Wechselschichtsystem aufzubauen, dessen Material und Schichtdickenverteilung im Hinblick auf optische Anforderungen optimiert werden können.

In WO 86/07149 wurde eine Membran beschrieben, die die Messsubstanzen vorfiltert und damit eine Vorselektion bewirkt. Auch bei den erfindungsgemäßen Systemen kann eine solche zusätzliche Membran vorgeschaltet sein. Insbesondere eignet sich das System zur Analyse von biologischen Prozessen, die mit sogenannten Botenstoffen zu tun haben. In manchen biologischen Prozessen löst beispielsweise das Eindringen einer spezifischen Substanz auf der einen Seite der Membran eine spezifische Reaktion auf der anderen Seite der Membran aus. Diese kann zum Beispiel darin bestehen, dass Botenstoffe die Membran verlassen und ins angrenzende Medium diffundieren. Solche Botenstoffe können mitunter Änderungen im pH-Wert verursachen. Lösungen können so präpariert werden, dass eine solche pH-Wertänderung eine Farbänderung der Lösung zur Folge hat. Die Farbänderung kommt meistens über eine Änderung der Licht-Absorptionseigenschaften der Lösung zustande und eine solche Änderung hat wiederum Einfluss auf die Feldverteilung im Gitterbereich, die gemäß den vorher beschriebenen Beispielen erfindungsgemäß meßbar ist.

Es wurden unterschiedliche Ausführungsformen von erfindungsgemäßen Systemen beschrieben. Um die dafür notwendigen Schichtsysteme herzustellen, können die unterschiedlichen und dem Fachmann geläufigen Beschichtungsverfahren, wie zum Beispiel thermisch bedampfen, PVD, CVD, insbesondere PECVD oder PICVD und andere verwendet werden. Zur Herstellung des Gitterbereichs eignen sich Interferenzverfahren, insbesondere Verfahren, die auf der Belichtung einer photoempfindlichen Schicht mittels Zweistrahlinterferenz beruhen oder Phasenmasken ausnutzen. Anschließend werden mittels der bekannten Lithographietechniken die in der photoempfindlichen Schicht realisierten Gitterstrukturen in die darunter liegende Schicht übertragen.

Eine Schwierigkeit kann darin bestehen, dass das unter dem Gitterbereich liegende Schichtsystem die Belichtung zur Herstellung des Gitters stört. In diesem Fall kann es von Vorteil sein, auf eine Prägetechnik umzusteigen, bei dem beispielsweise ein Polymer auf das Schichtsystem aufgebracht wird, dem anschließend mittels eines Prägestempels ein Gitter aufgeprägt wird. Mittels der nachfolgenden Lithographie wird dann das Gitter in die darunter liegende Schicht übertragen. Eine andere Möglichkeit diese Schwierigkeit zu umgehen besteht darin, ein erfindungsgemäßes System zu wählen, bei dem das Gitter im Substrat realisiert ist und sich die Gitterstrukturen bis an die Oberfläche übertragen. Auch eine solche Ausführungsform lässt die Möglichkeit zu, erfindungsgemäß den wesentlichen Anteil des sich aufbauenden elektromagnetischen Feldes in der Gitterstruktur und dabei unter anderem in den für die Messsubstanzen zugänglichen Gittergräben zu konzentrieren.

Die hier besprochenen Ausführungsformen der Erfindung sind lediglich als Beispiele anzusehen auf die der Gegenstand der Erfindung jedoch nicht beschränkt ist. Es sind beispielsweise unterschiedlichste Varianten der Ausführung der Beleuchtung denkbar:
- In den Beispielen wurde durchweg TE-polarisiertes Licht verwendet, wobei sich der Gegenstand der Erfindung auch auf Beaufschlagung mit TM-polarisiertem Licht erstrecken soll.
- In den Beispielen wurde lediglich nicht-konische Beaufschlagung mit Licht betrachtet. Es ist aber auch möglich Konfigurationen mit konischer Beaufschlagung zu wählen.
- Es sind Ausführungsformen denkbar, die kohärentes, inkohärentes oder teilkohärentes Licht verwenden.
- Es sind erfindungsgemäße Ausführungsformen mit polarisiertem Licht oder mit unpolarisiertem Licht denkbar. Bei speziell gewählter Polarisation, beispielsweise bei zirkularer Polarisation sind z.B Messungen der Phasenverschiebung und insbesondere der Änderung der Phasenverschiebung möglich.
- Als Lichtquellen kommen breitbandige Lichtquellen und/oder schmalbandige Lichtquellen und/oder monochromatische Lichtquellen in Frage. D.h. möglich ist unter anderem der Einsatz von kontinuierlichen oder gepulsten Lasern, insbesondere Halbleiterlasern, Leuchtdioden (LED) und Glühlampen.

Das zur Beaufschlagung verwendete Licht kann aus unterschiedlichen Richtungen kommen:
- Substratseitig
- Superstratseitig
- über ein im erfindungsgemäßen System zusätzlich integrierten und möglicherweise strukturierten Wellenleiter oder aus einer Kombination einzelner oder mehrerer oder aller.

Es wurden hier lediglich Gitterbereiche beschrieben, die eindimensionale, rechteckige Gitterprofile aufweisen. Auch hier sind erfindungsgemäße Ausführungsformen möglich und Gegenstand der vorliegenden Erfindung, die sich auf allgemeinere Gitterstrukturen beziehen. Beispielsweise:
- Eindimensionale Gitter, deren Profil von der Rechteckform abweicht und/oder deren Füllfaktoren von 0.5 abweichen.
- Eindimensionale Gitter, bei denen zwei oder mehrere Gitterperioden überlagert sind, deren Gittervektoren parallel zueinander sind.
- Zweidimensionale Gitter, d.h. periodische Strukturen mit mindestens zwei nicht parallelen Gittervektoren (gekreuzte Gitter), wobei insbesondere diejenigen zweidimensionalen Gitter in Bezug auf Polarisationseffekte interessant sind, deren Gittervektoren senkrecht aufeinander stehen und/oder betrags-mäßig gleich sind.
- Periodische Strukturen, die selbst aus Schichtsystemen aufgebaut sind.

Als Teilaspekt der hier beschriebenen Erfindung wurde bereits beschrieben, dass es möglich ist die hohe Feldverteilung in einem Gitterbereich zu konzentrieren, in dem die Brechungsindizes der beteiligten Materialien gleich oder kleiner als der Brechungsindex des Substrates ist.

Ein anderer Teilaspekt der Erfindung ist die Möglichkeit, dass aufgrund der Gittergräben den zu messenden Substanzen Bereiche maximaler Feldstärke zugänglich sind. Dieser erfinderische Aspekt kann auch durch einen strukturierten Gitterbereich erzielt werden, bei dem eines oder mehrere der beteiligten Materialen einen Brechungsindex besitzt der über dem Brechungsindex des Substrates liegt.

In den Beispielen wurden lediglich Systeme beschrieben, die die erfindungsgemäßen Effekte ausschließlich mittels dielektrischer Materialien erzielen. Es sind aber auch erfindungsgemäße Ausführungsformen möglich, die metallische Materialien und insbesondere strukturierte metallische Materialien umfassen. Weiterhin sind Ausführungsformen möglich, die die erfindungsgemäßen Effekte (hohes Feld in den für Messsubstanzen zugänglichen Gittergräben) mit den aus dem Stand der Technik bekannten Effekten, insbesondere mit Oberflächenplasmonen kombinieren.

Der Schwerpunkt in der Beschreibung war die Verwendung eines erfindungsgemäßen Systems in der Sensorik. Das erfindungsgemäße System ist allerdings immer dort anwendbar, wo im Nahfeld (d.h. im Bereich von bis zu ca 10 Wellenlängen Abstand von der Oberfläche) Substanzen belichtet werden sollen. Die Tatsache, dass beispielsweise im System in Figur 5 über eine Gitterperiode nahezu 4 Feldstärkemaxima realisiert sind, läßt beispielsweise die Möglichkeit zu, im Nahfeld eine photosensitive Schicht derart zu belichten, dass eine nahezu viermal kleinere Gitterperiode realisiert werden. 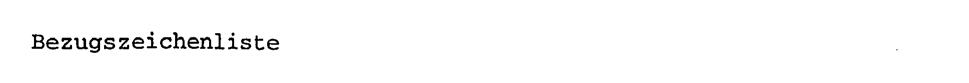
- 97: System
- 101: Substrat
- 103: Periodisches Gitter
- 107: Dielektrische Schicht
- 109: Biologische Koppelelemente
- 113: Superstrat

- 11: System
- 13: Substrat
- 17: Schichtsystem ,
- 19: Gitterstruktur
- 23: Gitterstege
- 29: Gittergräben
- 31: Biologische Koppelelemente am Grabenboden
- 31': Biologische Koppelelemente an den Seitenwänden
- 31'': Biologische Koppelelemente auf den Gitterstäben
- 37: Superstrat

- 211: System
- 223: Substrat
- 227: Schichtsystem
- 229: Gitterbereich
- 233: Biologische Bindungsmoleküle am Grabenboden
- 233': Biologische Bindungsmoleküle an den Seitenwänden
- 233'': Biologische Bindungsmoleküle auf den Gitterstäben
- 239: Superstrat

- 307: Messaufbau
- 311: Messchip
- 313: Lichtquelle
- 317: Selektiver Spiegel
- 331: Linse
- 337: Detektor

- LA: Anregungslicht
- LF: Fluoreszenzlicht

- 5: Linie gleichen Amplitudenquadrats mit Wert 5
- 10: Linie gleichen Amplitudenquadrats mit Wert 10
- 15: Linie gleichen Amplitudenquadrats mit Wert 15
- 20: Linie gleichen Amplitudenquadrats mit Wert 20

- 50: Linie gleichen Amplitudenquadrats mit Wert 50
- 100: Linie gleichen Amplitudenquadrats mit Wert 100
- 150: Linie gleichen Amplitudenquadrats mit Wert 150
- 200: Linie gleichen Amplitudenquadrats mit Wert 200

- 250: Linie gleichen Amplitudenquadrats mit Wert 250
- 500: Linie gleichen Amplitudenquadrats mit Wert 500
- 750: Linie gleichen Amplitudenquadrats mit Wert 750
- 1000: Linie gleichen Amplitudenquadrats mit Wert 1000

## Patentansprüche

1. Plattform zur Erzeugung einer elektromagnetischen Feldverteilung mit
- einem Substrat (13)
- einer am Substrat vorgesehenen strukturierten Schicht (19),
wobei die Schichtdicke der strukturierten Schicht (19) durch die maximale Strukturtiefe bestimmt ist,
- Kopplungsmittel (23,29)zur Kopplung von beaufschlagter elektromagnetischer Strahlung in die strukturierte Schicht zum Aufbau einer elektromagnetischen Feldverteilung innerhalb der strukturierten Schicht (19), **dadurch gekennzeichnet, dass** zwischen Substrat (13) und strukturierter Schicht (19) ein Vielschichtsystem vorgesehen ist, dergestalt, dass das Vielschichtsystem (17) zumindest teilweise unterbindet, dass elektromagnetische Felder, die in der strukturierten Schicht (19) aufgebaut werden, an solche, von null verschiedenen, höheren Beugungsordnungen der Felder koppeln, die in das Substrat (13) propagieren,
wobei die strukturierte Schicht (19), die Kopplungsmittel (23,29) und das Vielschichtsystem (17) aufeinander so abgestimmt sind, dass bei geeigneter Beaufschlagung der Plattform mit elektromagnetischer Strahlung die maximale Feldstärke der sich aufbauenden elektromagnetische Feldstärke im Bereich der strukturierten Schicht (19) ist.

2. Plattform gemäß Anspruch 1, **dadurch gekennzeichnet, dass** der Brechungsindex oder gegebenenfalls der effektive Brechungsindex der strukturierten Schicht (19) weniger als 1% höher, vorzugsweise jedoch kleiner als der Brechungsindex des Substrates (13) ist.

3. Plattform nach einem der Ansprüche 1 und 2, **dadurch gekennzeichnet, dass** die Struktur der strukturierten Schicht (19) im Wesentlichen periodisch angeordnete Einformungen (29) umfasst, die Bestandteil der Kopplungsmittel sind.

4. Plattform nach einem der vorangehenden Ansprüche, **dadurch gekennzeichnet, dass** das Vielschichtsystem (17) metallische Schichten, vorzugsweise aus Al und/oder Ag umfasst.

5. Plattform nach einem der Ansprüche 1 bis 3, **dadurch gekennzeichnet, dass** das Vielschichtsystem (17) dielektrische Schichten und vorzugsweise keine metallischen Schichten umfasst, wobei das Schichtsystem vorzugsweise in Wechselschichtbauweise aufgebaut ist, bei dem hoch und niederbrechende Schichten alternierend angeordnet sind.

6. Plattform nach Anspruch 1 bis 5, **dadurch gekennzeichnet, dass** die Art der Strukturierung, die Kopplungsmittel (23,29), und die Anzahl sowie das Material und die Dickenverteilung der Schichten des Vielschichtsystems so gewählt sind, dass die sich bei geeigneter Beaufschlagung der Plattform mit elektromagnetischer Strahlung aufbauende Feldstärkeverteilung in den schichtmaterialfreien Bereichen (29) der strukturierten Schicht (19) zumindest ein Maximum aufweist.

7. Feldverteilungsplattform die eine Plattform nach einem der Ansprüche 1 bis 6 umfasst, mit einer Quelle für die Erzeugung elektromagnetischer Strahlung und mit elektromagnetischem Feld, dessen Feldstärke im Bereich der strukturierten Schicht maximal ist.

8. Feldverteilungsplattform, die eine Plattform nach einem der Ansprüche 1 bis 7 umfasst, **dadurch gekennzeichnet, dass** die elektromagnetische Feldverteilung in den schichtmaterialfreien Bereichen (29) der strukturierten Schicht (19) zumindest ein Maximum aufweist.

9. Sensor mit einer Plattform oder einer Feldverteilungsplattform gemäß einem der vorangehenden Ansprüche zur Messung spezifischer Substanzen in einer biologischen und/oder chemischen und/oder biochemischen Probe.

10. Verfahren zur Erzeugung einer überhöhten, nicht ausschliesslich evaneszenten elektromagnetischen Feldverteilung mit folgenden Schritten:
- Auswahl eines Substrates (13)
- Auswahl des Materials und der Struktur einer strukturierten Schicht
- Auswahl der Materialien für ein Vielschichtsystem
- Festlegung der Parameter einer zur Beaufschlagung zu verwendenden elektromagnetischen Strahlung
- Simulation und Optimierung der elektomagnetischen Feldverteilung innerhalb einer das Substrat, das Vielschichtsystem und die strukturierte Schicht umfassenden Plattform bei Beaufschlagung mit elektromagnetischer Strahlung gemäß den festgelegten Parametern, wobei das Vielschichtsystem zwischen Substrat und strukturierter Schicht vorgesehen ist und es zumindest teilweise unterbinden soll, dass elektromagnetische Felder, die in der strukturierten Schicht (19) aufgebaut werden, an solche, von null verschiedenen, höheren Beugungsordnungen der Felder koppeln, die in das Substrat (13) propagieren, und als Optimierungsziel die maximale Feldstärke an einer Stelle innerhalb der strukturierten Schicht definiert ist;
- Aufbau der Plattform zumindest angenähert gemäß dem Resultat der Optimierung;
Beaufschlagung der Plattform mit elektromagnetischer Strahlung gemäß den festgelegten Parametern.

11. Verfahren nach Anspruch 10, **dadurch gekennzeichnet, dass** als Optimierungsziel eine elektromagnetische Feldverteilung angestrebt wird, die in den schichtmaterialfreien Bereichen der strukturierten Schicht zumindest ein Maximum aufweist.

## Claims

1. Platform to generate an electromagnetic field distribution, with
- a substrate (13)
- a structured layer (19) provided on the substrate, wherein the layer thickness of the structured layer (19) is determined by the maximum structure depth,
- coupling means (23, 29) to couple the impacted electromagnetic radiation into the structured layer to create an electromagnetic field distribution within the structured layer (19), **characterised in that** between the substrate (13) and the structured layer (19) is provided a multilayer system such that the multilayer system (17) at least partly prevents electromagnetic fields that are created in the structured layer (19) coupling to those of higher diffractive orders of the fields differing from zero which propagate in the substrate (13),
wherein the structured layer (19), the coupling means (23, 29) and the multilayer system (17) are matched to each other so that on suitable impacting of the platform with electromagnetic radiation, the maximum field intensity of the created electromagnetic field intensities lies in the area of the structured layer (19).

2. Platform according to claim 1, **characterised in that** the refractive index or where applicable the effective refractive index of the structured layer (19) is less than 1% higher, preferably lower than the refractive index of the substrate (13).

3. Platform according to any of claims 1 and 2, **characterised in that** the structure of the structured layer (19) substantially comprises periodically arranged recesses (29) which are a constituent part of the coupling means.

4. Platform according to any of the preceding claims, **characterised in that** the multilayer system (17) comprises metallic layers, preferably of Al and/or Ag.

5. Platform according to any of claims 1 to 3, **characterised in that** the multilayer system (17) comprises dielectric layers and preferably no metallic layers, wherein the layer system is preferably constructed in alternating layer structure in which high and low refractive layers are arranged alternately.

6. Platform according to claims 1 to 5, **characterised in that** the nature of the structuring, the coupling means (23, 29) and the number, material and thickness distribution of the layers of the multilayer system are selected such that the field intensity distribution generated on suitable impacting of the platform with electromagnetic radiation has at least one maximum in the areas (29) free from layer material in the structured layer (19).

7. Field distribution platform which comprises a platform according to any of claims 1 to 6, with a source for generating electromagnetic radiation and with an electromagnetic field, the field strength of which is at a maximum in the area of the structured layer.

8. Field distribution platform which comprises a platform according to any of claims 1 to 7, **characterised in that** the electromagnetic field distribution has at least one maximum in the areas (29) free from layer material in the structured layer (19).

9. Sensor with a platform or a field distribution platform according to any of the preceding claims to measure specific substances in a biological and/or chemical and/or biochemical specimen.

10. Method for generating a raised, not exclusively evanescent electromagnetic field distribution with the following steps:
- selection of a substrate (13)
- selection of a material and the structure of a structured layer
- selection of materials for a multilayer system
- establishing of parameters of an electromagnetic radiation to be used for impacting
- simulation and optimisation of the electromagnetic field distribution within a platform comprising the substrate, the multilayer system and the structured layer on impacting with electromagnetic radiation according to the established parameters,
wherein the multilayer system is provided between the substrate and the structured layer, and at least partly prevents electromagnetic fields that are created in the structured layer (19) coupling to those of higher diffractive orders of the fields differing from zero which propagate in the substrate (13), and the maximum field intensity at a point within the structured layer is defined as the optimization target;
- creation of the platform at least approximately according to the results of optimisation;
impacting of the platform with electromagnetic radiation according to the established parameters.

11. Method according to claim 10, **characterised in that** as an optimisation target, an electromagnetic field distribution is desired which has at least one maximum in the areas which are free from layer material in the structured layer.

## Revendications

1. Plateforme destinée à produire une répartition de champs électromagnétiques comprenant
- un substrat (13)
- une couche structurée (19) prévue sur le substrat, l'épaisseur de la couche structurée (19) étant déterminée par la profondeur maximale de la structure,
- des moyens d'accouplement (23, 29) destinés à accoupler un rayonnement électromagnétique injecté dans la couche structurée afin d'établir une répartition des champs électromagnétiques à l'intérieur de la couche structurée (19), **caractérisée en ce qu'**un système multicouches est prévu entre le substrat (13) et la couche structurée (19), de telle sorte que le système multicouches (17) empêche au moins en partie que des champs électromagnétiques, auxquels s'accouplent des ordres de diffraction très élevés, différents de zéro et se propageant dans le substrat (13), soient établis dans la couche structurée (19),
la couche structurée (19), les moyens d'accouplement (23, 29) et le système multicouches (17) étant adaptés les uns aux autres de sorte que lorsque la plateforme est soumise de manière appropriée à l'influence d'un rayonnement électromagnétique, l'intensité maximale du champ électromagnétique s'établissant se situe dans la zone de la couche structurée (19).

2. Plateforme selon la revendication 1, **caractérisée en ce que** l'indice de réfraction ou éventuellement l'indice de réfraction effectif de la couche structurée (19) est supérieur de moins de 1%, mais de préférence inférieur à l'indice de réfraction du substrat (13).

3. Plateforme selon l'une quelconque des revendications 1 et 2, **caractérisée en ce que** la structure de la couche structurée (19) comporte des formations en creux (29) disposées de façon sensiblement périodique qui font partie des moyens d'accouplement.

4. Plateforme selon l'une quelconque des revendications précédentes, **caractérisée en ce que** le système multicouches (17) comporte des couches métalliques composées de préférence de Al et/ou de Ag.

5. Plateforme selon l'une quelconque des revendications 1 à 3, **caractérisée en ce que** le système multicouches (17) comporte des couches diélectrique et ne comporte de préférence aucune couche métallique, le système multicouches présentant de préférence une construction de couches alternées dans laquelle les couches présentant un haut indice de réfraction et un faible indice de réfraction sont disposées en alternance.

6. Plateforme selon les revendications 1 à 5, **caractérisée en ce que** le type de structuration, les moyens d'accouplement (23, 29) et le nombre ainsi que le matériau et la répartition d'épaisseur des couches du système multicouches sont sélectionnés de sorte que lorsque la plateforme est soumise à l'influence appropriée d'un rayonnement électromagnétique, la répartition des champs électromagnétiques s'établissant comprend au moins un maximum dans les zones exemptes de matériau de couche (29) de la couche structurée (19).

7. Plateforme de répartition des champs comportant une plateforme selon l'une quelconque des revendications 1 à 6, comprenant une source pour la production d'un rayonnement électromagnétique et comprenant un champ électromagnétique dont l'intensité est maximale dans la zone de la couche structurée.

8. Plateforme de répartition des champs comportant une plateforme selon l'une quelconque des revendications 1 à 7, **caractérisée en ce que** la répartition des champs électromagnétiques comprend au moins un maximum dans la zone exempte de matériau de couche (29) de la couche structurée (19).

9. Capteur comprenant une plateforme ou une plateforme de répartition des champs selon l'une quelconque des revendication précédentes destinée à mesurer des substances spécifiques dans un échantillon biologique et/ou chimique et/ou biochimique.

10. Procédé de production d'une répartition excessive, non exclusivement évanescente de champs électromagnétiques, comprenant les étapes suivantes consistant à :
- sélectionner un substrat (13)
- sélectionner le matériau et la structure d'une couche structurée
- sélectionner les matériaux pour un système multicouches
- déterminer les paramètres d'un rayonnement électromagnétique à utiliser pour l'injection
- simuler et optimiser la répartition des champs électromagnétiques à l'intérieur d'une plateforme comportant le substrat, le système multicouches et la couche structurée lorsqu'elle est soumise à l'influence d'un rayonnement électromagnétique selon les paramètres déterminés, le système multicouches étant prévu entre le substrat et la couche structurée et devant au moins en partie empêcher que des champs électromagnétiques auxquels s'accouplent des ordres de diffraction des champs très élevés, différents de zéro et se propageant dans le substrat (13) soient établis dans la couche structurée (19) et que l'intensité maximale des champs en un point situé à l'intérieur de la couche structurée soit définie comme objectif d'optimisation ;
- concevoir la plateforme au moins approximativement selon le résultat de l'optimisation ;
- soumettre la plateforme à l'influence d'un rayonnement électromagnétique selon les paramètres déterminés.

11. Procédé selon la revendication 10, **caractérisé en ce qu'**on cherche à obtenir, comme objectif d'optimisation à poursuivre, une répartition électromagnétique des champs comprenant au moins un maximum dans les zones exemptes de matériau de couche de la couche structurée.
